# EUROPÄISCHE PATENTSCHRIFT

(11) **EP 1 878 030 B1**
(45) Veröffentlichungstag und Bekanntmachung des Hinweises auf die Patenterteilung: **09.06.2010**
(21) Anmeldenummer: 06754920.4
(22) Anmeldetag: 28.04.2006
(51) Int. Cl.: H01F 7/08, F16K 31/06, F16K 27/00

(54) **ELEKTROPNEUMATISCHES PATRONENVENTIL, INSBESONDERE ZUM EINSATZ ALS VORSTEUERVENTIL BEI EINEM SCHMALBAUENDEN PNEUMATIKVENTIL FÜR EINE KOMPAKTE VENTILEINHEIT**
ELECTROPNEUMATIC CARTRIDGE VALVE, ESPECIALLY FOR USE AS A PILOT VALVE IN A NARROWLY DESIGNED PNEUMATIC VALVE FOR A COMPACT VALVE UNIT
SOUPAPE A CARTOUCHE ELECTROPNEUMATIQUE, UTILISEE EN PARTICULIER COMME SOUPAPE PILOTE AVEC UNE SOUPAPE PNEUMATIQUE DE STRUCTURE ETROITE POUR FORMER UNE UNITE A SOUPAPES COMPACTE

(30) Priorität: 28.04.2005 DE 102005020278
(43) Veröffentlichungstag der Anmeldung: 16.01.2008
(73) Patentinhaber: Bosch Rexroth AG, 71701 Schwieberdingen (DE)
(72) Erfinder: GÖDERT, Heinz, 71642 Ludwigsburg (DE); TROLTSCH, Karl, 71701 Schwieberdingen (DE)
(74) Vertreter: Kietzmann, Lutz
(86) Internationale Anmeldenummer: PCT/EP2006/061918
(87) Internationale Veröffentlichungsnummer: WO 2006/114447

(56) Entgegenhaltungen:
- EP-A- 0 568 028
- EP-A- 1 508 732
- DE-U1- 20 120 608
- US-A- 5 808 534

## Beschreibung

Die vorliegende Erfindung betrifft ein elektropneumatisches Patronenventil, insbesondere zum Einsatz als Vorsteuerventil bei einem schmalbauenden Pneumatikventil für eine kompakte Ventileinheit, mit einem eine elektromagnetische Spule enthaltenen Antriebsteil, das ein einen runden Querschnitt aufweisendes Ventilteil betätigt, das mindestens zwei äußere Druckluftanschlüsse besitzt.

Das Einsatzgebiet der vorliegenden Erfindung erstreckt sich vornehmlich auf schmalbauenden Pneumatikventile, welche Seite an Seite aneinandergereiht eine kompakte im Wesentlichen quaderförmige Ventileinheit ergeben. Eine solche Ventileinheit hat den Vorteil, dass die Speisedruckversorgung und die Abfuhr der von den einzelnen Pneumatikventilen erzeugten Abluft zentral erfolgen kann. Die Ventileinheit fällt baulich um so kompakter aus, je schmalbauender die einzelnen Pneumatikventile konstruiert sind. Bei Pneumatikventilen dieses Einsatzzweckes sind zwei alternative Bauprinzipe von Vorsteuerventilen allgemein bekannt, welche die Aufgabe haben, ausgehend von einem elektrischen Ansteuersignal einen entsprechenden pneumatischen Steuerdruck zum Schalten des Pneumatikventils aufzubringen. Zum Einen kann ein Vorsteuerventil als Aufsatzventil konzipiert sein, welches meist lösbar durch Schrauben am Körper des Pneumatikventils befestigt ist. Alternativ hierzu ist es auch möglich, das Vorsteuerventil als Patronenventil auszubilden, welches in einer korrespondierenden Ausnehmung im Körper des Pneumatikventils untergebracht ist. Die vorliegende Erfindung zielt auf die letztgenannte Bauform ab.

Bei Pneumatikventilen zum Aufbau einer möglichst kompakten Ventileinheit ist die minimale Baubreite jedes Pneumatikventils das primäre Optimierungskriterium. Ständiges Konstruktionsziel ist es daher, auf begrenztem Raum möglichst viele Schaltfunktionen zu realisieren, um damit einen sehr kompakten Aufbau der Ventileinheit zu ermöglichen.

Die Baubreite eines Pneumatikventils wird wiederum vor allem durch die Baubreite des Vorsteuerventils bestimmt. Da überwiegend elektromagnetische Vorsteuerventile zum Einsatz kommen, sind die physikalischen Gesetzmäßigkeiten dieses Aktorprinzips bei der Optimierung der Baubreite zu berücksichtigen. Insbesondere die vom Aktor erzeugte Betätigungskraft wird durch die im Arbeitsluftspalt erreichbare magnetische Induktion und die Querschnittsfläche des Magnetankers im Bereich des Arbeitsluftspalts vorgegeben.

Die erreichbare magnetische Induktion wird neben den verfügbaren Querschnitten für die magnetische Flussleitung und den Eigenschaften des im Magnetkreis verwendeten Materials vor allem durch die Ampere-Windungszahl der elektromagnetischen Spule definiert. Da die zulässige Leistungsaufnahme von miniaturisierten Vorsteuerventilen besonders aus thermischen Belastungsgründen auf sehr geringe Werte begrenzt ist, sollte für eine kraftoptimale Auslegung des Vorsteuerventils die Windungszahl der elektromagnetischen Spule und die Querschnittsfläche des Arbeitsluftspaltes möglichst groß gewählt werden.

Aus der DE 201 20 608 Ul geht ein gattungsgemäßes pneumatisches Patronenventil hervor, welches auch als Vorsteuerventil zum Einsatz kommen kann. Das bekannte Patronenventil besitzt eine durchgehende im Wesentlichen zylindrische Gestalt, wobei das die elektromagnetische Spule enthaltende Antriebsteil mit dem die Ventilmechanik enthaltenden Ventilteil eine in etwa zylindrische Außenkontur ergeben, welche über die axiale Länge nur eine geringe Variation des Durchmessers besitzt und für das Einführen in eine als Stufenbohrung ausgebildete Ausnehmung seitens des Körpers eines Pneumatikventils ausgelegt ist, um hier als Vorsteuerventil zu dienen.

Das die elektromagnetische Spule aufweisende Antriebsteil des Patronenventils besitzt eine äußere Hülse aus einem Eisenmetall, worüber der magnetische Rückfluss erfolgt. Die Hülse umschließt des Weiteren vollständig die hierin integrierte elektromagnetische Spule und hat somit eine Gehäusefunktion. Zum Schutz vor Korrosion ist die Hülse mit einer Ummantelung aus Kunststoff versehen. Diese Konstruktion bedingt, dass das nutzbare Wickelfenster der elektromagnetischen Spulen nach außen durch die Wandstärke der Hülse plus Ummantelung und durch den erforderlichen Abstand des Außendurchmessers der Wicklung der elektromagnetischen Spule zum Innendurchmesser der Hülse begrenzt ist. Des Weiteren sind im Bereich des Ventilteils Ringnuten zur Aufnahme von Dichtringen vorgesehen.

Ein Nachteil dieses Standes der Technik besteht darin, dass der Außendurchmesser des bekannten pneumatischen Patronenventils recht groß ausfällt, so dass dieses für besonders schmalbauende Ventilkörper der eingangs genannten Art nicht geeignet ist. Bei weiterer Miniaturisierung von Patronenventilen der bekannten Bauart wird die verfügbare Betätigungskraft des Aktors immer geringer.

Aus der EP1 508 732 A1 ist ein elektropneumatisches Patronenventil mit einem eine elektromagnetische Spule enthaltenden Antriebsteil bekannt, der einen im wesentlichen rechteckigen Querschnitt aufweist. Das Antreibsteil betätigt ein Ventilteil mit rundem Querschnitt und Druckluft anschlüssen, die im Bereich des zylindrischen Mantelfläche des ventilteils nach außen geführt sind. Ein flussführender Teil des äußeren Magnetkreises der Spule ist als U-förmiger Bügel ausgebildet. Ein ähnliches Ventil ist auch aus der EP0 568 028A1 bekannt.

Es ist daher die Aufgabe der vorliegenden Erfindung, ein pneumatisches Patronenventil zu schaffen, welches eine im Verhältnis zur Baugröße relativ hohe Schaltleistung erbringt und sich andererseits platzsparend in schmalbauende Pneumatikventile integrieren lässt.

Die Aufgabe wird ausgehend von einem pneumatischen Patronenventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Druckluftanschlüsse im Bereich der zylindrischen Mantelfläche des Ventilteils nach außen geführt sind, und dass das Antriebsteil gegenüber dem Ventilteil einen im Wesentlichen rechteckigen Querschnitt aufweist, dessen kürzere Kantenlänge B durch den Wickelungsdurchmesser der Spule bestimmt ist.

Der Vorteil der erfindungsgemäßen Lösung resultiert aus der speziellen Formgebung des pneumatischen Patronenventils. Das bauraumoptimierungskritische Antriebsteil lässt sich einfach und platzsparend in einer korrespondierenden rechteckigen Ausnehmung an einer schmalen Seite eines schmalbauenden Pneumatikventils aufnehmen, wobei sich auch die Druckluftanschlüsse platzsparend an das Patronenventil ankoppeln lassen. Ein als Vorsteuerventil einzusetzendes pneumatisches Patronenventil besitzt vorzugsweise eine 3/2-Wegefunktion, so dass als Druckluftanschlüsse ein Speisedruckanschluss, ein Entlüftungsanschluss sowie ein Arbeitsanschluss für den Steuerdruck vorgesehen sind. Die platzsparende Konstruktion des erfindungsgemäßen Patronenventils resultiert daraus, dass das Antriebsteil derart gestaltet ist, dass der Aussendruchmesser der elektromagnetischen Spule bis auf die Breite des vom Körper des Pneumatikventil bereitgestellten Montageraums ausgedehnt ist.

Gegenüber der üblichen Konstruktion von Patronenventilen mit zylindrischem Antrieb ergibt sich durch die erfindungsgemäße Konstruktion eine deutlich vergrößerte Höhe des Wickelfensters der elektromagnetischen Spule, was bei gleichem Anker-Durchmesser und gleicher Länge eine deutlich erhöhte Durchflutung ermöglicht. Dieser Effekt, der bei miniaturisierten elektromagnetischen Ventilen besonders ausgeprägt ist, bringt eine deutliche Erhöhung des Kraftpotentials des Aktors mit sich. Die erfindungsgemäße Gestaltung eines pneumatischen Patronenventils ist bezüglich der Baubreite B der korrespondierenden Ausnehmung optimiert, was zu einem geringfügigen Zuwachs der Bauhöhe führt. Eine Vergrößerung in dieser Dimension ist jedoch für die Kompaktheit eines schmalbauenden Pneumatikventils zum Aufbau einer Ventileinheit nicht kritisch und kann teilweise durch konstruktive Maßnahmen im Bereich der Grundplatten kompensiert werden. Der rechteckige Querschnitt des Ventil antriebs, der für die Integration als ein konstruktiver Nachteil gesehen werden könnte, ist insbesondere beim Einsatz in Pneumatikventilen unkritisch, weil die Ventilgehäuse üblicherweise als Spritzteile ausgeführt werden, und somit auch eine rechteckige Aussparung fertigungstechnisch einfach zu realisieren ist. Denn insbesondere bei schmalbauenden Pneumatikventilen, welche in großer Stückzahl zu fertigen sind, wird der Körper üblicherweise nicht als mechanisch gefertigte Gehäusebohrung sondern als Spritzteil aus Kunststoff ausgeführt. Damit ist es auch kein fertigungstechnisches Problem, die zum erfindungsgemäßen Patronenventil korrespondierende Ausnehmung im Körper des Pneumatikventils rechteckig zu gestalten.

Gemäß der Erfindung ist vorgesehen, dass ein flussführender Teil des äußeren Magnetkreises der elektromagnetischen Spule als U-förmiger Bügel ausgebildet ist. Der Bügel verläuft benachbart zu den beiden kürzeren Kantenlängen B des rechteckigen Querschnitts, in einem Bereich also, in welchem genügend Bauraum vorhanden ist. Somit ist der für die Funktion des elektromagnetischen Aktors erforderliche äußere Magnetkreis im Gegensatz zum Stand der Technik nicht als zylindrische Hülse oder dergleichen ausgeführt. Bei der Dimensionierung der Wandstärke des die Hülse ersetzenden Bügels ist darauf zu achten, dass sich eine zur Hülse äquivalente Querschnittsfläche für die Führung des magnetischen Flusses ergibt.

Es ist denkbar, den Luftspalt zwischen der elektromagnetischen Spule und der korrespondierenden Ausnehmung im Körper des Patronenventils mit einer aushärtenden Gießmasse zu versiegeln, um eine Axialführung sowie einen Wärmeübergang zum Körper des Patronenventils zu schaffen. Der Verguss der offenen elektromagnetischen Spule im Körper des Patronenventils bringt gegenüber der Ausführung als herkömmliches zylinderförmiges gekapseltes Patronenventil den Vorteil, dass zwischen der elektromagnetischen Spule und der äußeren Mantelhülse keine den Wärmeübergang zum Pneumatikventil behindernde Luftschicht vorhanden ist. Da die Spulenerwärmung eines der zentralen Probleme bei der Auslegung eines miniaturisierten Vorsteuerventils ist, kommt ein derartiges gezieltes Ableiten der Verlustwärme der elektromagnetischen Spule eine besondere Bedeutung zu.

Gemäß einer anderen die Erfindung verbessernden Maßnahme ist vorgesehen, dass der U-förmige Bügel, welcher den äußeren Magnetkreis des Antriebsteils bildet, im Bereich des Scheitelpunktes eine Bohrung zur Aufnahme eines zylindrischen Magnetkerns aufweist. Über diese Bohrung kann der ortsfest zur elektromagnetischen Spule vorgesehene Magnetkern zunächst axial verschiebbar angeordnet werden, um diesen erst nach Justage relativ zu einem koaxial benachbart angeordneten und gegenüber dem ortsfesten Magnetkern beweglichen Magnetanker zu fixieren.

Vorzugsweise dienen die beiden Schenkel des Bügels zusätzlich zur Leitung des magnetischen Flusses auch als mechanisches Verbindungsglied zwischen dem Antriebsteil und dem pneumatischen Steuerteil. Der besagte Bügel kann als Stanz-Biegeteil in einfacher Weise gefertigt werden, wobei Pins für die elektrische Kontaktierung der Enden der elektromagnetischen Spule durch Ausbrüche entgegen der Richtung der Schenkel gestaltet werden können. Zur Sicherung der Verbindung zwischen Antriebsteil und Ventilteil kann vorgesehen werden, dass beide Enden der Schenkel des Bügels nach Radialinnen gerichtet auslaufen, um eine lösbare Verriegelung mit dem Ventilteil zu bilden. Die Form dieser Art Haken am Ende beider Schenkel des Bügels kann dazu genutzt werden, eine axiale Kraftkomponente zu erzeugen, welche ein axiales Verpressen von im Antriebsteil enthaltenen Bauelementen gegen den die Bohrung des Bügels umgebenden Bereich gewährleistet. Durch diese zusätzliche Maßnahme kann über zwischenliegende elastomere O-Ringe eine axiale Vorspannung erzeugt werden, wodurch fertigungsbedingte Toleranzen einfach kompensierbar sind. Anstelle der hakenförmigen Enden an den Schenkeln des Bügels ist es jedoch auch möglich, das Zusammenfügen der im Antriebsteil enthaltenen Bauteile durch Umbördeln, Verpressen oder dergleichen umzusetzen.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.la: eine Seitenansicht eines pneumatischen Patronenventils, das in eine korrespondierende Ausnehmung seitens eines Pneumatikventils eingebaut ist,
- Fig.1b: eine Draufsicht auf das eingebaute Patronenventil nach Fig.1a, und
- Fig.2: einen Längsschnitt durch das Patronenventil mit Mitteln zur Justage.

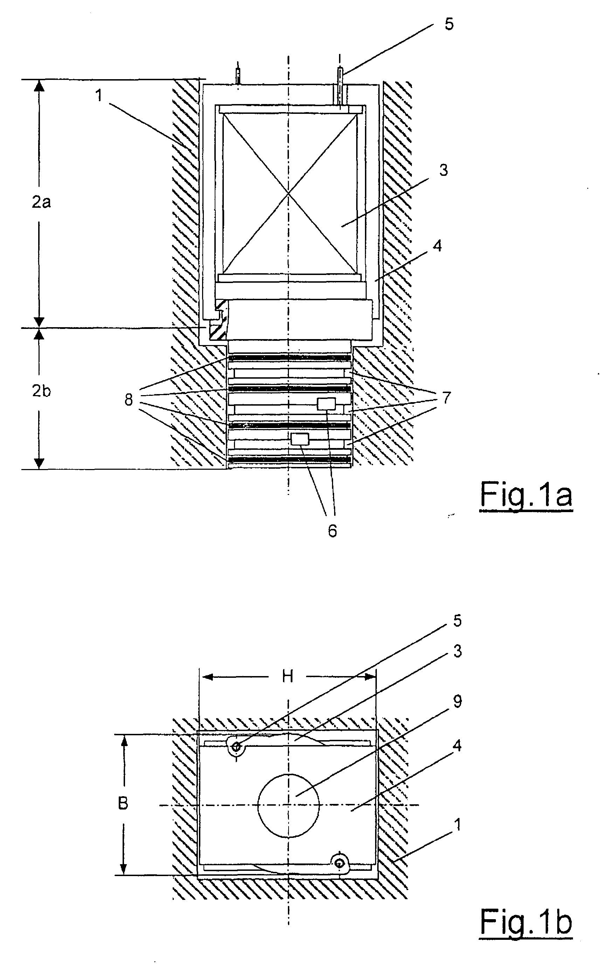

Gemäß Fig.1a besitzt der Körper eines Pneumatikventils 1 eine Ausnehmung, in welcher das aus Antriebsteil 2a und Ventilteil 2b bestehende pneumatische Patronenventil eingesetzt ist. Das Antriebsteil 2a besteht im Wesentlichen aus einer elektromagnetischen Spule 3, welche von einem U-förmigen Bügel 4 als flussführender Teil des äußeren Magnetkreises umgeben ist. Der elektrische Anschluss der elektromagnetischen Spule 3 erfolgt über je mit einem Spulenende verbundenen Anschlusspin 5.

Das Ventilteil 2b des pneumatischen Patronenventils weist einen runden Querschnitt auf und ist mit mehreren Ringkanälen 7 versehen, in welche Druckluftanschlüsse 6 einmünden. Zur Abdichtung der Ringkanäle 7 für die Druckluftanschlüsse 6 untereinander sind dazwischen diverse Dichtringe 8 angeordnet, welche dichtend am Körper des Pneumatikventils 1 zur Anlage kommen.

Gemäß Fig.1b weist das Antriebsteil 2a gegenüber dem Ventilteil 2b einen wesentlichen rechteckigen Querschnitt mit einer kürzeren Kantenlänge B und einer längeren Kantenlänge auf. Der Wickelungsdurchmesser der elektromagnetischen Spule 3 bestimmt ersichtlicherweise die kürzere Kantenlänge B des Antriebsteils 2a. Die elektromagnetische Spule 3 ist ungekapselt in der korrespondierenden Ausnehmung seitens des Pneumatikventils 1 untergebracht. Der U-förmige Bügel 4 aus einem eisenmetallischen Material besitzt im Bereich des Scheitelpunktes eine Bohrung zur Aufnahme eines zylindrischen Magnetkerns 9, welcher zunächst axial verschiebbar innerhalb der Bohrung angeordnet ist und erst nach Justage hierin fest fixiert wird.

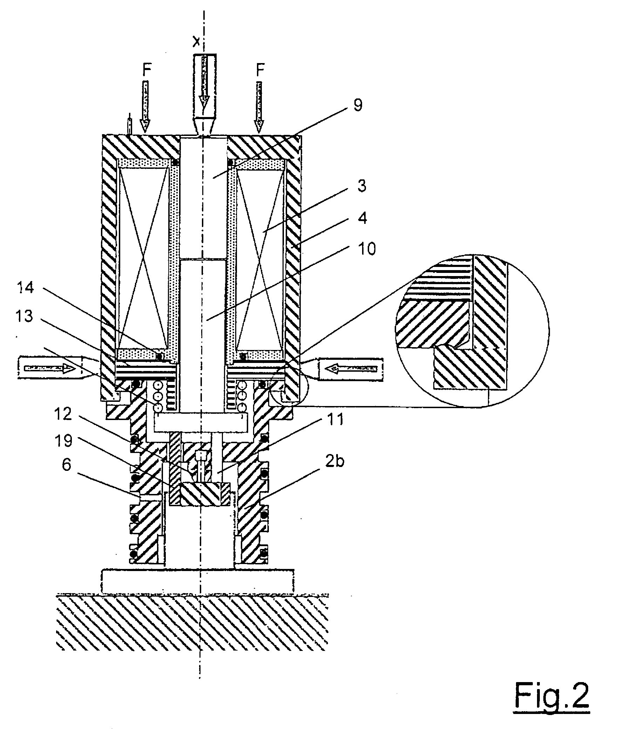

Nach Fig.2 ist benachbart zum ortsfest gegenüber dem Bügel 4 angeordneten Magnetkern 9 ein bewegbarer Magnetanker 10 vorgesehen, welcher einen Stößel 11 zur Betätigung eines Ventilsitzes 12 nach Maßgabe der Bestromung der elektromagnetischen Spule 3 axial bewegt.

Die beiden Schenkel des U-förmigen Bügels 4 dienen zusätzlich zur Leitung des magnetischen Flusses auch als mechanisches Verbindungsglied zwischen dem Antriebsteil 2a und dem Ventilteil 2b. Denn im Bereich der Enden der beiden Schenkel des Bügels 4 herrscht aufgrund des magnetischen Flusses eine Kraftkomponente, die senkrecht zur Schenkelfläche nach Radialinnen (verdeutlicht durch Pfeile) wirkt, so dass eine Klemmkraft auf das zwischen den beiden Enden des Bügels 4 angeordnete Ventilteil 2b erzeugt wird. Zusätzlich laufen die beiden Enden der Schenkel des Bügels 4 nach Radialinnen aus, um eine Verriegelung mit dem Ventilteil 2b zu bilden (siehe Detailvergrößerung). Die Form der nach Radialinnen gerichteten Enden des Bügels 4 gewährleistet ein axiales Verpressen von im Antriebsteil 2a eingeklammerten Bauteilen, wie Polplatte 13, die über einen toleranzsausgleichen Dichtring 14 gegen das Gehäuse der elektromagnetischen Spule 3 drückt, um auf diese Weise eine axiale Vorspannung zu erzeugen.

Nach Abschluss der Montage des pneumatischen Patronenventils ist dieses zu Justieren.

Die Justage des Patronenventils hat das Ziel, fertigungsbedingte Toleranzen zu kompensieren und den Hub des beweglichen Magnetankers 10 so einzustellen, dass dieser exakt auf den für die Betätigung des Ventilsitzes 12 erforderlichen Hub angepasst ist. Durch eine derartige Justage ist für das Antriebsteil 2a praktisch keine Hubreserve erforderlich, was eine leistungsoptimierte Auslegung des elektromagnetischen Wandlers ermöglicht. Die Antriebskennlinie kann so gestaltet werden, dass sich über einen extrem kleinen Ankerhub von ca. 0,2 mm und kleiner eine hohes Kraftpotential ergibt.

Trotz der mit diesem geringen Ankerhub verbundenen hohen Anforderungen an die Präzision des Gesamtsystems (Toleranzketten) sind durch die im Folgenden beschriebenen Justage die Fertigungstoleranz der verwendeten Bauteile relativ unkritisch. Um die Justage durchzuführen, wird das komplette Antriebsteil mit dem damit verbundenen oberen Teil des Ventilgehäuses auf eine zylindrische Vorrichtung geschoben, in die das Dichtelement mit der Betätigungsgabel eingelegt ist. Die Stößel 11 der Betätigungsgabel greifen in Aussparungen des Ventilgehäuses und stützen sich auf der ihnen zugewandten Stirnseite des beweglichen Magnetankers ab. Durch eine definierte Kraft F die axial in den Antrieb eingeleitet wird, wird das Dichtelement so auf den Ventilsitz 12 gedrückt, dass der Sitz sicher mit einer bestimmten Vorspannung geschlossen ist.

Die Justage selbst erfolgt durch eine axiale Verschiebung des im U-fömigen Bügel 4 zu fixierenden Magnetkerns 9. Der Magnetkern 9 wird so lange in x-Richtung verschoben, bis sich die Stirnfläche des Magnetkerns 9 und der benachbarte bewegbare Magnetanker 10 berühren, so dass der Arbeitsluftspalt zu Null wird.

In dieser Position wird der Magnetkern 9 durch ein entsprechendes Fügeverfahren z.B. Laserschweißen, Klemmen usw. ortsfest mit dem Bügel 4 verbunden. Damit ist der Antrieb in der betätigten Schaltstellung auf den Ventilsitz 12 justiert.

Die Justage des Ventilsitz 12 ist so deutlich unkritischer und kann aufgrund der einfacheren Toleranzkette durch konstruktive Auslegung abgedeckt werden.

### Bezugszeichenliste

- 1: Pneumatikventil
- 2a: Antriebsteile
- 2b: Ventilteil
- 3: elektromagnetische Spule
- 4: Bügel
- 5: Anschlusspin
- 6: Druckmittelanschluss
- 7: Ringkanal
- 8: Dichtring
- 9: Magnetkern
- 10: Magnetanker
- 11: Stößel
- 12: Ventilsitz
- 13: Polplatte
- 14: Dichtring
- 16: Ankerfeder

## Patentansprüche

1. Elektropneumatisches Patronenventil, insbesondere zum Einsatz als Vorsteuerventil bei einem schmalbauenden Pneumatikventil (1) für eine kompakte Ventileinheit, mit einem eine elektromagnetische Spule (3) enthaltenden Antriebsteil (2a), mit einem im Wesentlichen rechteckigen Querschnitt, dessen kürzere Kantenlänge (B) durch den Wicklungsdurchmesser der elektromagnetischen Spule (3) bestimmt ist, wobei das Antriebsteil ein einen runden Querschnitt aufweisendes Ventilteil (2b) mit äußeren Druckluftanschlüssen (6) betätigt,
wobei mindestens ein Teil der Druckluftanschlüsse (6) im Bereich der zylindrischen Mantelfläche des Ventilteils (2b) nach außen geführt sind, wobei ein flussführender Teil des äußeren Magnetkreises der elektromagnetischen Spule (3) als U-förmiger Bügel (4) ausgebildet ist, **dadurch gekennzeichnet, dass** die Schenkel des U-förmigen Bügels im Bereich der Enden mit einer Polplatte (13) verbunden sind.

2. Elektropneumatisches Patronenventil nach Anspruch 1,
**dadurch gekennzeichnet, dass** die elektromagnetische Spule (3) ungekapselt in eine zumindest das Ventilteil (2b) umgebene korrespondierende Ausnehmung des Pneumatikventils (1) untergebracht ist.

3. Elektropneumatisches Patronenventil nach Anspruch 2,
**dadurch gekennzeichnet, dass** der Luftspalt zwischen der elektromagnetischen Spule (3) und der Ausnehmung des Pneumatikventils (1) mit einer aushärtenden Gießmasse versiegelbar ist.

4. Elektropneumatisches Patronenventil nach Anspruch 1,
**dadurch gekennzeichnet, dass** der flussführende Teil des äußeren Magnetkreises der elektromagnetischen Spule (3) im Bereich des Scheitelpunktes einen Bohrung zur Aufnahme eines zylindrischen Magnetkerns (9) besitzt.

5. Elektropneumatisches Patronenventil nach Anspruch 4,
**dadurch gekennzeichnet, dass** der Magnetkern (9) axial verschiebbar innerhalb der Bohrung angeordnet ist, um den Magnetkern (9) erst nach Justage relativ zu einem koaxial benachbart angeordneten, bewegbaren Magnetanker (10) zu fixieren.

6. Elektropneumatisches Patronenventil nach Anspruch 1,
**dadurch gekennzeichnet, dass** die beiden Schenkel des Bügels (4) zusätzlich zur Leitung des magnetischen Flusses auch als mechanisches Verbindungsglied zwischen dem Antriebsteil (2a) und dem Ventilteil (2b) dienen.

7. Elektropneumatisches Patronenventil nach Anspruch 1,
**dadurch gekennzeichnet, dass** beide Enden der Schenkel des Bügels (4) nach Radialinnen gerichtet auslaufen, um eine feste Verbindung mit dem Ventilteil (2b) zu bilden.

8. Elektropneumatisches Patronenventil nach Anspruch 7,
**dadurch gekennzeichnet, dass** die Form der nach Radialinnen gerichteten Enden des Bügels (4) ein axiales Verpressen von im Antriebsteil (2a) hiervon eingeklammerten Bauteile gewährleistet.

## Claims

1. An electro-pneumatic cartridge valve, in particular for use as a pilot valve in a slimline pneumatic valve (1) for a compact valve unit, comprising a drive section (2a) containing an electromagnetic coil (3) with an essentially rectangular cross-section having a short side (B) determined by the winding diameter of the electromagnetic coil (3), wherein the drive section actuates a valve section (2b) having a round cross-section and external pressurized-air ports (6), wherein at least part of the pressurized-air ports (6) extends toward the outside in the region of the cylindrical side wall of the valve section (2b), wherein a flux-conducting part of the outer magnet circuit of the electromagnetic coil (3) is formed as a U-shaped yoke (4),
**characterised in that** the legs of the U-shaped yoke are connected to a pole plate (13) in the area of their ends.

2. The electro-pneumatic cartridge valve according to claim 1,
**characterised in that** the electromagnetic coil (3) is accommodated in a non-encapsulated state in a corresponding cavity of the pneumatic valve (1) surrounding at least the valve section (2b).

3. The electro-pneumatic cartridge valve according to claim 2,
**characterised in that** the air gap between the electromagnetic valve (3) and the cavity of the pneumatic valve (1) is sealable by means of a hardening potting material.

4. The electro-pneumatic cartridge valve according to claim 1,
**characterised in that** the flux-conducting part of the outer magnetic circuit of the electromagnetic coil (3) includes a bore in the area of the apex for receiving a cylindrical magnetic core (9).

5. The electro-pneumatic cartridge valve according to claim 4,
**characterised in that** the magnetic core (9) is arranged within the bore in an axially displaceable manner, so as to fix the magnetic core (9) only after adjustment relative to a moveable magnet armature (10) arranged in a coaxially adjacent position.

6. The electro-pneumatic cartridge valve according to claim 1,
**characterised in that** the two legs of the yoke (4), in addition to their function of conducting the magnetic flux, also serve as a mechanical connecting element between the drive section (2a) and the valve section (2b).

7. The electro-pneumatic cartridge valve according to claim 1,
**characterised in that** both ends of the legs of the yoke (4) point radially inwardly to establish a fixed connection with the valve section (2b).

8. The electro-pneumatic cartridge valve according to claim 7,
**characterised in that** the form of the ends of the yoke (4) pointing radially inwardly ensures axial compression of components embraced thereby in the drive section (2a).

## Revendications

1. Soupape électropneumatique de type cartouche, en particulier pour l'emploi comme soupape pilote dans une soupape pneumatique à structure étroite (1) pour une unité à soupape compacte, comprenant une partie d'entraînement (2a) qui contient une bobine électromagnétique (3), avec une section essentiellement rectangulaire, dont le petit côté (B) est déterminé par le diamètre d'enroulement de la bobine électromagnétique (3), ladite partie d'entraînement actionnant une partie de soupape (2b) présentant une section arrondie avec des raccords à air comprimé extérieurs (6),
dans laquelle au moins une partie des raccords à air comprimé (6) sont menés vers l'extérieur dans la région de la surface enveloppe cylindrique de la partie de soupape (2b), une partie qui mène le flux du circuit magnétique extérieur de la bobine électromagnétique (3) étant réalisée sous forme d'étrier en forme de U (4), **caractérisée en ce que** les branches de l'étrier en forme de U sont reliées dans la région des extrémités à une plaque polaire (13).

2. Soupape électropneumatique de type cartouche selon la revendication 1,
**caractérisée en ce que** la bobine électromagnétique (3) est logée sans être encapsulée dans un évidement correspondant de la soupape pneumatique (1), qui entoure au moins la partie de soupape (2b).

3. Soupape électropneumatique de type cartouche selon la revendication 2,
**caractérisée en ce que** l'entrefer entre la bobine électromagnétique (3) et l'évidement de la soupape pneumatique (1) est susceptible d'être scellé avec une masse durcissable à couler.

4. Soupape électropneumatique de type cartouche selon la revendication 1,
**caractérisée en ce que** la partie qui mène le flux du circuit magnétique extérieur, de la bobine électromagnétique (3), possède un perçage, dans la région du sommet, pour la réception d'un noyau magnétique cylindrique (9).

5. Soupape électropneumatique du type cartouche selon la revendication 4,
**caractérisée en ce que** le noyau magnétique (9) est agencé avec possibilité de translation axiale à l'intérieur du perçage, afin de fixer le noyau magnétique (9) uniquement après ajustement par rapport à une culasse magnétique mobile (10) agencée coaxialement au voisinage.

6. Soupape électropneumatique du type cartouche selon la revendication 1,
**caractérisée en ce que** les deux branches de l'étrier (4) servent, en addition à la conduction du flux magnétique, également comme organes de liaison mécanique entre la partie d'entraînement (2a) et la partie de soupape (2).

7. Soupape électropneumatique du type cartouche selon la revendication 1,
**caractérisée en ce que** les deux extrémités des branches de l'étrier (4) se terminent de manière orientée vers l'intérieur en sens radial, afin de former une jonction ferme avec la partie de soupape (2b).

8. Soupape électropneumatique du type cartouche selon la revendication 7,
**caractérisée en ce que** la forme des extrémités de l'étrier (4), orientées radialement vers l'intérieur, assure un pressage axial des composants coincés par celui-ci dans la partie d'entraînement (2a).
